# EUROPÄISCHE PATENTSCHRIFT

(11) **EP 3 850 286 B1**
(45) Veröffentlichungstag und Bekanntmachung des Hinweises auf die Patenterteilung: **02.11.2022**
(21) Anmeldenummer: 19769085.2
(22) Anmeldetag: 06.09.2019
(51) Int. Cl.: F27B 7/38, C04B 7/47, F27D 15/02

(54) **KÜHLER ZUM KÜHLEN VON HEISSEM SCHÜTTGUT UND VERFAHREN ZUM VERHINDERN VON ROSTDURCHFALL IN EINEM KÜHLER**
COOLER FOR COOLING HOT BULK MATERIAL AND METHOD FOR PREVENTING GRATE RIDDLINGS IN A COOLER
REFROIDISSEUR POUR LE REFROIDISSEMENT DE PRODUIT EN VRAC CHAUD ET PROCÉDÉ POUR PRÉVENIR LA CHUTE DE MATÉRIAU À TRAVERS UNE GRILLE DANS UN REFROIDISSEUR

(30) Priorität: 11.09.2018 DE 102018215406
(43) Veröffentlichungstag der Anmeldung: 21.07.2021
(73) Patentinhaber: thyssenkrupp Industrial Solutions AG, 45143 Essen (DE); thyssenkrupp AG, 45143 Essen (DE)
(72) Erfinder: FRERICH, Daniel, 59556 Lippstadt (DE); RIEGER, Rolf, 33602 Bielefeld (DE); AVERMANN, Norbert, 59227 Ahlen (DE); DOWE, Matthias, 59229 Ahlen (DE); BISPING, Justin, 48231 Warendorf (DE)
(74) Vertreter: thyssenkrupp Intellectual Property GmbH
(86) Internationale Anmeldenummer: PCT/EP2019/073864
(87) Internationale Veröffentlichungsnummer: WO 2020/053098

(56) Entgegenhaltungen:
- WO-A1-98/48231
- DE-A1- 10 117 226

## Beschreibung

Die Erfindung betrifft einen Kühler zum Kühlen von heißem Schüttgut, insbesondere Zementklinker und ein Verfahren zum Verhindern von Rostdurchfall in einem Kühler.

Zur Kühlung von heißem Schüttgut, wie beispielsweise Zementklinker, ist es bekannt, dass das Schüttgut auf einen von Kühlgas durchströmbaren Belüftungsboden eines Kühlers aufgegeben wird. Das heiße Schüttgut wird anschließend zur Kühlung von einem Ende des Kühlers zum anderen Ende bewegt und dabei von Kühlgas durchströmt.

Für den Transport des Schüttgutes vom Kühleranfang zum Kühlerende sind verschiedene Möglichkeiten bekannt. Bei einem sogenannten Schubrostkühler erfolgt der Transport des Schüttgutes durch bewegbare Förderelemente, die sich in Förderrichtung und entgegen der Förderrichtung bewegen. Die Förderelemente weisen eine Schubkante auf, die das Material in Förderrichtung transportieren.

Aus der DE 100 18 142 B4 ist ein Kühler bekannt, der eine Mehrzahl von sich in Förderrichtung und entgegen der Förderrichtung bewegbaren Förderelementen aufweist. Jedes der Förderelemente ist über ein Trägerelement mit geeigneten Transportmechanismen verbunden, das die Förderelemente bewegbar an einer Maschinenrahmenstruktur lagert. Durch ein geeignetes Bewegungsmuster im Vor- und Rückhub wird das Material in Förderrichtung transportiert. Aus der DE 101 17 226 A1 und der WO 98/48231 A1 sind Dichtungselemente im Bereich der Antriebselemente bekannt.

Weiter ist ein Kühler bekannt, der eine Mehrzahl von sich in Förderrichtung und entgegen der Förderrichtung bewegbaren Förderelementen aufweist. Die Förderelemente sind an einer Rahmenstruktur angebracht, die über Lager an dem Maschinenrahmen gelagert sind. Die Förderelemente weisen eine Form auf, die das transportieren in Förderrichtung ermöglichen.

Durch die Relativbewegungen der Kühlerelemente zueinander kommt es im Betrieb des Kühlers häufig dazu, dass zu kühlendendes Schüttgut durch den Kühlrost fällt (Rostdurchfall) und beispielsweise die Funktionsfähigkeit der mechanischen Bauteile des Kühlers negativ beeinflusst. Ebenfalls bedingt durch die Relativbewegung kommt es im Betrieb des Kühlers häufig zu hohem Verschleiß der Antriebselemente.

Davon ausgehend ist es Aufgabe der vorliegenden Erfindung, einen Kühler bereitzustellen, der einen geringen Rostdurchfall aufweist und gleichzeitig die Antriebselemente vor Verschleiß schützt.

Diese Aufgabe wird erfindungsgemäß durch einen Kühler mit den Merkmalen des unabhängigen Vorrichtungsanspruchs 1 gelöst. Vorteilhafte Weiterbildungen ergeben sich aus den abhängigen Ansprüchen.

Ein Kühler zum Kühlen von Schüttgut, insbesondere Zementklinker umfasst nach einem ersten Aspekt der Erfindung einen stationären von Kühlgas durchströmbaren Belüftungsboden zur Aufnahme des Schüttguts, zumindest eine Fördereinheit mit oberhalb des Belüftungsbodens angeordneten Förderplanken, die zum Transport des Schüttguts in Förderrichtung und entgegen der Förderrichtung hin und her bewegbar sind, und eine Dichtungsanordnung zum Verhindern von Rostdurchfall, wobei der Kühler zumindest ein Antriebselement zum Antreiben der Förderplanken aufweist, das sich durch den Belüftungsboden erstreckt. Die stationäre Dichtungsanordnung ist mittels eines lösbaren Verbindungselements an dem Belüftungsboden angebracht. Gleichzeitig liegt die Dichtungsanordnung an dem Antriebselement an, wobei der Abstand zwischen der Dichtungsanordnung und dem Antriebselement über das Verbindungslement einstellbar ist.

Ein solcher Kühler ist vorzugsweise einem Ofen zum Brennen von Zementklinker nachgeschaltet. Die Förderplanken sind vorzugsweise relativ zu dem Belüftungsboden bewegbar angebracht und weisen beispielsweise sich quer zur Förderrichtung erstreckenden Mitnehmer auf, die für einen besseren Transport des Schüttguts sorgen. Bei dem Kühlgas handelt es sich vorzugsweise um Kühlluft, die von unten, beispielsweise mittels Ventilatoren, durch den Belüftungsboden strömt. Der Belüftungsboden weist vorzugsweise eine Mehrzahl von Luftdurchlässen auf, die derart ausgebildet sind, dass Kühlgas durch diese strömbar ist, ein Durchfallen von auf dem Belüftungsboden liegendem Kühlgut aber verhindert wird. Beispielsweise sind die Luftdurchlässe von übereinander liegenden Profilen gebildet, die einen Rostdurchfall verhindern.

Die Dichtungsanordnung dient dem Verhindern von Rostdurchfall in einem Bereich zwischen dem Belüftungsboden und dem Antriebselement, wobei sich das Antriebselement zusammen mit den Förderplanken relativ zu dem Belüftungsboden bewegt. Das Antriebselement ist vorzugsweise mit einer Antriebseinrichtung, wie beispielsweise einem Aktuator, verbunden und erstreckt sich durch eine Aussparung in dem Belüftungsboden. Die Dichtungsanordnung liegt an dem Antriebselement an, wodurch im Betrieb des Kühlers Reibung zwischen dem Antriebselement und der Dichtungsanordnung auftritt und ein Verschleiß der Dichtungsanordnung erfolgt. Der Abstand der Dichtungsanordnung zu dem Antriebselement ist vorzugsweise stufenlos einstellbar. Dies ermöglicht in einem Verschleißfall der Dichtungsanordnung, einen Spalt zwischen der Dichtungsanordnung und dem Antriebselement auf einfache Weise zu schließen und somit einen Durchfall von Schüttgut durch die Aussparung im Belüftungsboden, durch die sich das Antriebselement erstreckt, zu verhindern.

Gemäß einer ersten Ausführungsform weist die stationäre Dichtungsanordnung ein Wandelement auf und der Abstand zwischen dem Wandelement und dem Antriebselement ist einstellbar. Das Wandelement ist beispielsweise plattenförmig ausgebildet und ist gemäß einer weiteren Ausführungsform durch ein lösbares Verbindungsmittel, insbesondere eine Schraube, mit dem Belüftungsboden verbunden.

Gemäß einer weiteren Ausführungsform ist in dem Belüftungsboden ein Langloch vorgesehen, in dem das Verbindungsmittel angeordnet ist. Dadurch wird das stufenlose Einstellen des Abstandes zwischen der Dichtungsanordnung, insbesondere dem Wandelement, und dem Antriebselement ermöglicht. Das Langloch erstreckt sich insbesondere in Richtung des Antriebselements, vorzugsweise quer zur Förderrichtung.

Gemäß einer weiteren Ausführungsform ist das Wandelement L-förmig ausgebildet mit einem Winkel von etwa 60° -120°, vorzugsweise 75°- 105°, insbesondere 90° - 100°.

Vorzugsweise weist das Wandelement zwei Schenkel auf, die einen der vorangehenden Winkel zueinander aufweisen. Einer der Schenkel ist insbesondere an dem Belüftungsboden befestigt, wobei der andere Schenkel an dem Antriebselement anliegt.

Die Dichtungsanordnung weist gemäß einer weiteren Ausführungsform ein an dem Wandelement angebrachtes Verschleißschutzelement auf. Vorzugsweise ist das Verschleißschutzelement zwischen dem Wandelement und dem Antriebselement angeordnet und liegt das Verschleißschutzelement an dem Antriebselement an. Gemäß einer weiteren Ausführungsform weist das Verschleißschutzelement zumindest eine Platte auf.

Das Verschleißschutzelement weist gemäß einer weiteren Ausführungsform Hartmetall, wie Wolframcarbid auf. Das Verschleißschutzelement umfasst beispielsweise eine Auftragsschweißung oder ist durch Metallspritzen oder Flammspritzen, ausgebildet. Vorzugsweise umfasst das Verschleißschutzelement eine Keramikbeschichtung, eine Karbidbeschichtung und/ oder Stahl.

Gemäß einer weiteren Ausführungsform ist jede Förderplanke mit einer Mehrzahl von Antriebselementen verbunden. Vorzugsweise sind die Antriebselemente gleichmäßig zueinander beabstandet und über die Länge des Kühlers angeordnet. Die Antriebselemente sind jeweils insbesondere mit einer Antriebseinrichtung und einer Förderplanke verbunden und dienen daher der Übertagung des Antriebs von der Antriebseinrichtung auf die Fördereinheit. Gemäß einer weiteren Ausführungsform ist das Antriebselement plattenförmig ausgebildet.

Jedes Antriebselement erstreckt sich gemäß einer weiteren Ausführungsform durch eine jeweilige Aussparung in dem Belüftungsboden. Vorzugsweise nimmt jede Aussparung genau ein Antriebselement. Eine Mehrzahl von Antriebselementen in jeweiligen Aussparungen in dem Belüftungsboden sorgt für einen geringeren Rostdurchfall, da die Aussparungen sich nicht über die gesamte Länge des Kühlers erstrecken. Zusätzlich wird die Reibung zwischen der Dichtungsanordnung und dem Antriebselement verringert. Die Aussparung ist gemäß einer weiteren Ausführungsform schlitzförmig ausgebildet und weist eine Länge auf, die der Hublänge der Fördereinheit entspricht. Dadurch wird die Länge der Aussparung möglichst gering gehalten, was zusätzlich einen Rostdurchfall verhindert.

Die Erfindung betrifft auch ein Verfahren zum Verhindern von Rostdurchfall in einem voran beschriebenen Kühler, wobei in einem Verschleißfall, der Abstand zwischen der Dichtungsanordnung und dem Antriebselement verringert wird. Bei dem Verschleißfall handelt es sich insbesondere um den Verschleiß der Dichtungsanordnung, vorzugsweise des Wandelements oder der Verschleißschutzelemente. Der Abstand wird vorzugsweise derart verringert, dass die Dichtungsanordnung an dem Antriebselement anliegt. Insbesondere werden die Schraubverbindungen zwischen dem Wandelement und dem Belüftungsboden gelöst, das Wandelement anschließend in Richtung des Antriebselements bewegt und die Schraubverbindungen anschließend in dem jeweiligen Langloch des Belüftungsbodens befestigt.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung eines Ausschnitts eines Kühlers in einer perspektivischen Draufsicht gemäß einem Ausführungsbeispiel.
Fig. 2 zeigt eine schematische Darstellung eines Kühlers aus Fig.1 in einer Frontansicht.
Fig. 3 zeigt eine schematische Darstellung einer Querschnittsansicht einer Dichtungsanordnung gemäß eines Ausführungsbeispiels.
Fig. 4 zeigt eine schematische Darstellung einer Dichtungsanordnung in einer perspektivischen Ansicht gemäß einem Ausführungsbeispiel.

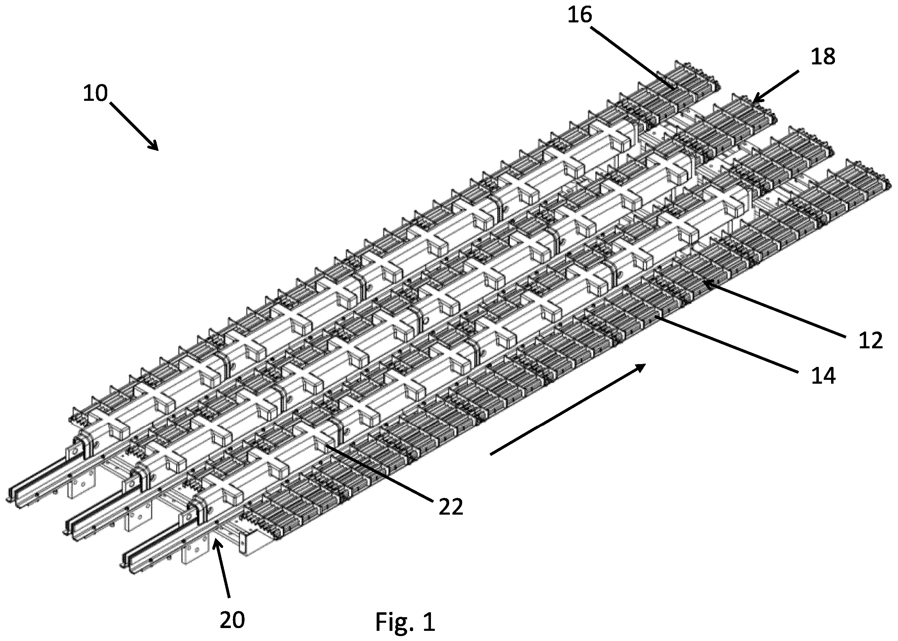

Fig. 1 zeigt einen Ausschnitt eines Kühlers 10 mit einem Belüftungsboden 12. Der Belüftungsboden 12 weist einen Rost mit einer Mehrzahl von Luftdurchlässen 14 auf, durch welche Kühlgas, insbesondere Kühlluft, von unten nach oben strömbar ist. Der Belüftungsboden 12 weist eine Mehrzahl von parallelen Rostplanken 18, beispielhaft vier Rostplanken 18, auf die jeweils eine Mehrzahl von hintereinander angeordneten Kühlroste 16 aufweisen. Die Rostplanken 18 sind zueinander beabstandet angeordnet, wobei zwischen zwei benachbarten Rostplanken 18 jeweils eine Förderplanke 20 angeordnet ist. Der Kühler 10 weist eine Fördereinheit mit einer Mehrzahl von parallelen Förderplanken 20 auf, wobei in dem Ausschnitt der Fig. 1 lediglich drei Förderplanken 20 dargestellt sind. Jede Förderplanke 20 erstreckt sich beispielhaft entlang der gesamten Erstreckung des Belüftungsbodens 12 und weist eine Mehrzahl von sich quer zur Förderrichtung erstreckenden und gleichmäßig zueinander beabstandeten Mitnehmern 22 auf. Die Förderrichtung ist beispielhaft mit einem Pfeil dargestellt.

Bei dem Kühler 10 der Fig. 1 handelt es sich um einen nach dem Schubförderprinzip arbeitenden Kühler, wobei die Förderplanken 20 relativ zu dem stationären Belüftungsboden 12 bewegbar angebracht sind. Im Betrieb des Kühlers 10 werden die Förderplanken 20, vorzugsweise nach dem "walking-floor-Prinzip", gleichzeitig in Förderrichtung und ungleichzeitig entgegen der Förderrichtung bewegt. Daraus ergibt sich insgesamt eine Bewegung des auf den Förderplanken 20 und dem Belüftungsboden 12 liegenden Schüttguts in Förderrichtung, da die einzeln zurück bewegten Förderplanken keine Förderung des Schüttguts bewirken.

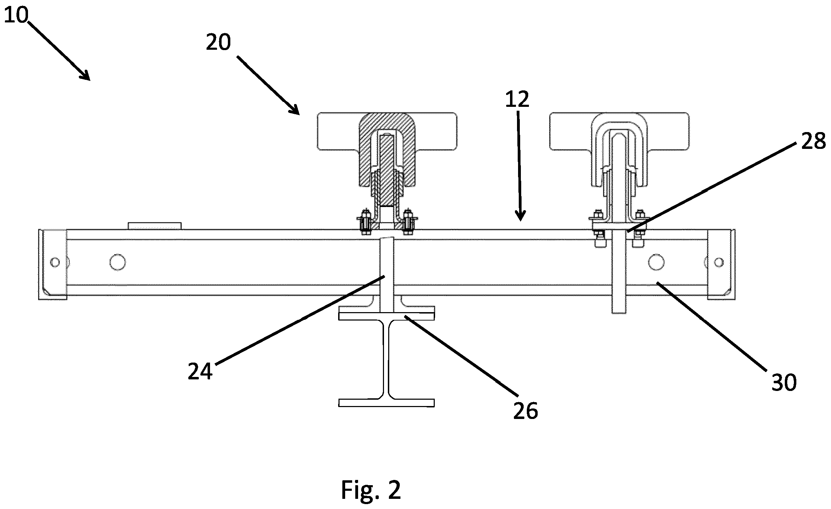

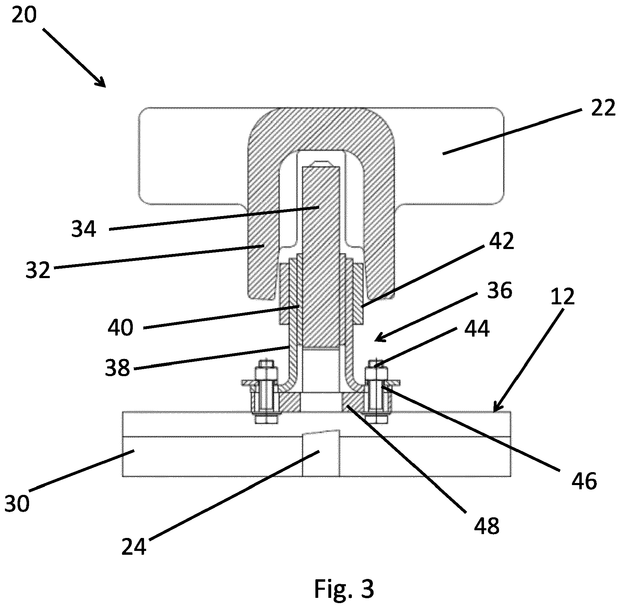

Fig. 2 zeigt eine Frontansicht des Kühlers 10, wobei beispielhaft zwei Förderplanken 20 dargestellt sind mit einer Förderplanke 20 in einer Schnittansicht. Eine Detailansicht der geschnittenen Fördereinrichtung 20 ist in Fig. 3 dargestellt. Fig. 2 zeigt des Weiteren ein Antriebselement 24, das sich durch den Belüftungsboden 12 hindurch erstreckt und eine Verbindung zwischen der Förderplanke 20 und einem Antriebsträger 26 bildet. Der Antriebsträger 26 ist unterhalb des Belüftungsbodens 12 angeordnet und mit einem nicht dargestellten Antrieb, wie beispielsweise einem Aktuator, verbunden. Vorzugsweise ist jeder Förderplanke 20 ein Antriebsträger 26 zugeordnet, wobei sich der Antriebsträger 26 parallel zu der Förderplanke 20 erstreckt. An dem Antriebsträger 26 sind eine Mehrzahl von Antriebselementen 24 angebracht, die beispielsweise gleichmäßig zueinander beabstandet sind. Vorzugsweise sind die Antriebselemente 24 plattenförmig oder stabförmig und insbesondere aus einem Metall ausgebildet. Jedes Antriebselement 24 erstreckt sich durch eine jeweilige Aussparung 28 in dem Belüftungsboden 12. Beispielhaft umfasst der Belüftungsboden 12 in dem Ausführungsbeispiel der Fig. 2 einen Trägerboden 30, der vorzugsweise durch den in Fig. 2 nicht dargestellte Kühlrost 16 fallendes Schüttgut aufnimmt. Das Antriebselement 24 erstreckt sich insbesondere durch den Belüftungsboden 12 und den darunter liegenden Trägerboden 30.

Figur 3 zeigt eine Detaildarstellung der Querschnittansicht der Förderplanke 20. Die Förderplanke 20 weist einen im Wesentlichen u-förmigen Mantel 32 auf, an dem die Mitnehmer 22 angeordnet sind. Der Mantel 32 erstreckt sich vorzugsweise über die gesamte Länge der Förderplanke 20. Innerhalb des Mantels 32 ist ein Zwischenelement 34 angeordnet, das den Hohlraum innerhalb des u-förmigen Mantels 32 zumindest teilweise ausfüllt. Das Zwischenelement 34 erstreckt sich vorzugsweise zwischen zwei Antriebselementen 24 in Förderrichtung des Kühlers 10 und ist insbesondere mit den Antriebselementen 24 fest verbunden. Der Mantel 32 ist insbesondere fest mit dem Antriebselement 24 verbunden, beispielsweise mittels eines Bolzens oder einer Schraubverbindung.

Fig. 3 zeigt auch eine Dichtungsanordnung 36 zum Verhindern von einem Durchfallen von Schüttgut durch die Aussparungen 28 in dem Belüftungsboden, insbesondere bei einer Bewegung der Förderplanken 20 relativ zu dem Belüftungsboden 12. Die Dichtungsanordnung 36 umfasst ein stationäres Wandelement 38, das mit dem Belüftungsboden 12 fest verbunden ist. Beispielhaft ist das Wandelement 38 mit dem Belüftungsboden 12 verschraubt. Der Belüftungsboden 12 umfasst beispielhaft eine Platte 48, die zwischen dem Trägerboden 30 und dem Wandelement 38 angeordnet ist und an dem das Wandelement 38 verschraubt ist. Die Platte 48 dient vorzugsweise als Trägerelement zur Befestigung der Wandelemente 38 und vereinfacht insbesondere die Montage der Dichtungsanordnung 36. Das Wandelement 38 ist vorzugsweise als Winkel ausgebildet und im Wesentlichen L-förmig. Insbesondere weist das Wandelement 38 zwei Schenkel auf, die in einem Winkel von etwa 60 - 120, vorzugsweise 80 - 100°, insbesondere 90° zueinander angeordnet sind. Die Dichtungsanordnung 36 liegt, vorzugweise mit lediglich einem Schenkel des Wandelements 38, an dem Antriebselement 24 und/ oder dem Zwischenelement 34 an, sodass kein Schüttgut zwischen der Dichtungsanordnung 38 und dem Antriebselement 24 und/ oder dem Zwischenelement 34 durchfallen kann. An dem Wandelement 38 ist zumindest ein Verschleißschutzelement 40 angebracht, das zwischen dem Wandelement 38 und dem Antriebselement 24 oder dem Zwischenelement 34 angeordnet ist. Vorzugsweise weist das Wandelement 38 ein zweites Verschleißschutzelement 42 auf, das gegenüberliegend des ersten Verschleißschutzelements 40 angebracht ist. Das zweite Verschleißschutzelement 42 ist zwischen dem Wandelement 38 und dem u-förmigen Mantel 32 angeordnet und verhindert bei einer Bewegung der Förderplanke 20 und somit einer Bewegung des Mantels 32 relativ zu dem Wandelement 38 einen Verschleiß des Wandelements 38. Die Verschleißschutzelemente 40, 42 erstrecken sich vorzugsweise entlang des gesamten Wandelements 38, wobei es ebenfalls denkbar ist, dass mehrere Verschleißschutzelemente 40, 42 in Längsrichtung des Wandelements 38 nebeneinander angeordnet sind.

Insbesondere erstreckt sich das Wandelement 38 der Dichtungsanordnung 36 entlang der gesamten Länge der Förderplanke 20. Jede Förderplanke 20 weist beispielsweise zumindest zwei Dichtungsanordnungen 36 auf, die an jeder Seite des Antriebselements 24 oder des Zwischenelements 34 angeordnet sind. Dichtungsanordnungen 36 sind gegenüberliegend angeordnet, sodass sich zwischen zwei Dichtungsanordnungen 36 zumindest ein Antriebselement 24 erstreckt. Jede Dichtungsanordnung 38 ist lösbar an dem Belüftungsboden 12, beispielsweise mittels einer Schraube 44, befestigt. Die Schrauben 44 sind jeweils in einem Langloch 46 angeordnet, das sich in Richtung des Antriebselements 24 erstreckt. Bei einem Verschleiß der Verschleißschutzelemente 40, 42 ist es so möglich, die Wandelemente 38 der Dichtungsanordnungen 36 in Richtung des Antriebselements 24 zu verschieben.

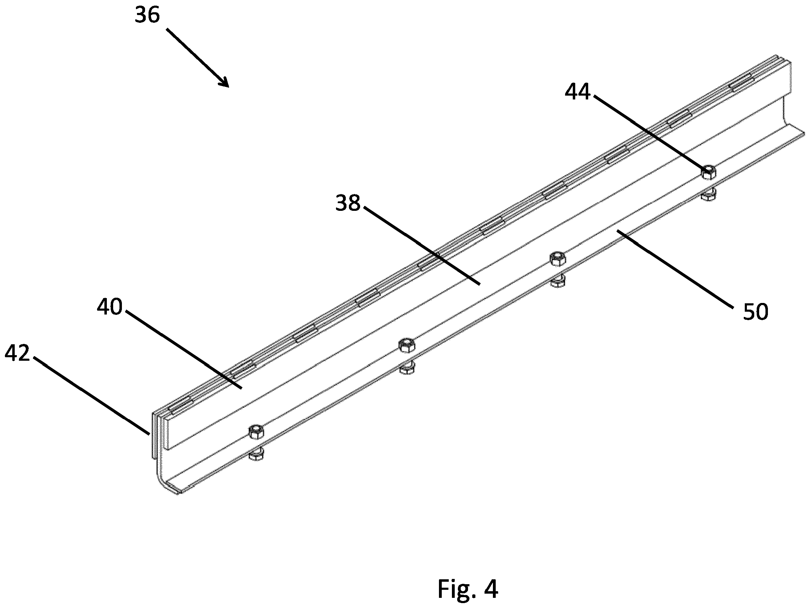

Fig. 4 zeigt eine Dichtungsanordnung 36 mit einem Wandelement 38 mit einem ersten horizontalen und einem zweiten vertikalen Schenkel. An dem vertikalen Schenkel sind an beiden Seitenflächen jeweils ein Verschleißelement 40, 42 angebracht. Beispielhaft ist die Dichtungsanordnung 36 mittels vier gleichmäßig zueinander beabstandeten Schrauben 44 in einem nicht dargestellten Langloch an dem Belüftungsboden 12 befestigt. An dem Wandelement 38 ist beispielhaft eine Trägerplatte 50 angeordnet, die sich vorzugsweise entlang der gesamten Länge des Wandelements 38 erstreckt. Die Trägerplatte 50 dient vorzugsweise als Unterlage für die Schrauben 44.

### Bezugszeichenliste

- 10: Kühler
- 12: Belüftungsboden
- 14: Luftdurchlässen
- 16: Kühlrost
- 18: Rostplanke
- 20: Förderplanke
- 22: Mitnehmer
- 24: Antriebselement
- 26: Antriebsträger
- 28: Aussparung in dem Belüftungsboden
- 30: Trägerboden
- 32: Mantel
- 34: Zwischenelement
- 36: Dichtungsanordnung
- 38: Wandelement
- 40: erstes Verschleißschutzelement
- 42: zweites Verschleißschutzelement
- 44: Schraube
- 46: Langloch
- 48: Platte
- 50: Trägerplatte

## Patentansprüche

1. Kühler (10) zum Kühlen von Schüttgut, insbesondere Zementklinker, aufweisend einen stationären von Kühlgas durchströmbaren Belüftungsboden (12) zur Aufnahme des Schüttguts,
zumindest eine Fördereinheit mit oberhalb des Belüftungsbodens angeordneten Förderplanken (20), die zum Transport des Schüttguts in Förderrichtung und entgegen der Förderrichtung hin und her bewegbar sind, und
eine Dichtungsanordnung (36) zum Verhindern von Rostdurchfall,
wobei der Kühler (10) zumindest ein Antriebselement (24) zum Antreiben der Förderplanken (20) aufweist, das sich durch den Belüftungsboden (12) erstreckt, **dadurch gekennzeichnet, dass**
die stationäre Dichtungsanordnung (36) mittels eines lösbaren Verbindungselements (44) an dem Belüftungsboden (12) angebracht ist und an dem Antriebselement (24) anliegt, wobei der Abstand zwischen der Dichtungsanordnung (36) und dem Antriebselement (24) über das Verbindungsmittel (44) einstellbar ist.

2. Kühler (10) nach Anspruch 1, wobei die stationäre Dichtungsanordnung (36) ein Wandelement (38) aufweist und der Abstand zwischen dem Wandelement (38) und dem Antriebselement (24) einstellbar ist.

3. Kühler (10) nach Anspruch 2, wobei das Wandelement (38) durch ein lösbares Verbindungsmittel, insbesondere eine Schraube (44), mit dem Belüftungsboden (12) verbunden ist.

4. Kühler (10) nach Anspruch 3, wobei in dem Belüftungsboden (12) ein Langloch (46) vorgehsehen ist, in dem das Verbindungsmittel (44) angeordnet ist.

5. Kühler (10) nach einem der Ansprüche 2- 4, wobei das Wandelement (38) L-förmig ausgebildet ist und einen Winkel von etwa 60° -120°, vorzugsweise 75°- 105°, insbesondere 90° - 100° aufweist.

6. Kühler (10) nach einem der Ansprüche 2 - 5, wobei die Dichtungsanordnung (36) ein an dem Wandelement (38) angebrachtes Verschleißschutzelement (40, 42) aufweist.

7. Kühler (10) nach Anspruch 6, wobei das Verschleißschutzelement (40, 42) zumindest eine Platte aufweist.

8. Kühler (10) nach Anspruch 6 oder 7, wobei das Verschleißschutzelement (40, 42) ein Hartmetall, wie beispielsweise Wolframcarbid, und/ oder Keramik aufweist.

9. Kühler (10) nach einem der vorangehenden Ansprüche, wobei jede Förderplanke (20) eine Mehrzahl von Antriebselementen (24) aufweist.

10. Kühler (10) nach einem der vorangehenden Ansprüche, wobei das Antriebselement (24) plattenförmig ausgebildet ist.

11. Kühler (10) nach einem der vorangehenden Ansprüche, wobei sich jedes Antriebselement (24) durch eine jeweilige Aussparung (28) in dem Belüftungsboden (12) erstreckt.

12. Kühler (10) nach Anspruch 10, wobei die Aussparung (28) schlitzförmig ist und eine Länge aufweist, die der Hublänge der Fördereinheit entspricht.

13. Verfahren zum Verhindern von Rostdurchfall in einem Kühler (10) gemäß einem der vorangehenden Ansprüche, wobei in einem Verschleißfall, der Abstand zwischen der Dichtungsanordnung (36) und dem Antriebselement (24) verringert wird.

## Claims

1. A cooler (10) for cooling bulk material, in particular cement clinker, having a stationary aeration grate (12) for receiving the bulk material, wherein the aeration grate (12) is able to be passed by a flow of cooling gas;
at least one conveyor unit having conveyor planks (20) which are disposed above the aeration grate and for transporting the bulk material are movable in a reciprocating manner in the conveying direction and counter to the conveying direction; and
a seal assembly (36) for preventing grate riddlings;
wherein the cooler (10) for driving the conveyor planks (20) has at least one drive element (24) which extends through the aeration grate (12),
**characterized in that**
the stationary seal assembly (36) is attached to the aeration grate (12) by means of a releasable connection means (44) and lies against the drive element (24), wherein the spacing between the seal assembly (36) and the drive element (24) is adjustable by way of the connection means (44).

2. The cooler (10) as claimed in claim 1, wherein the stationary seal assembly (36) has a wall element (38), and the spacing between the wall element (38) and the drive element (24) is adjustable.

3. The cooler (10) as claimed in claim 2, wherein the wall element (38) is connected to the aeration grate (12) by way of a releasable connection means, in particular a screw (44).

4. The cooler (10) as claimed in claim 3, wherein an elongate hole (46) in which the connection means (44) is disposed is provided in the aeration grate (12).

5. The cooler (10) as claimed in one of claims 2 to 4, wherein the wall element (38) is configured so as to be L-shaped and has an angle of approximately 60° - 120°, preferably 75° - 105°, in particular 90° - 100°.

6. The cooler (10) as claimed in one of claims 2 to 5, wherein the seal assembly (36) has a wear-protection element (40, 42) which is attached to the wall element (38).

7. The cooler (10) as claimed in claim 6, wherein the wear-protection element (40, 42) has at least one plate.

8. The cooler (10) as claimed in claim 6 or 7, wherein the wear-protection element (40, 42) comprises a hard metal such as, for example, tungsten carbide, and/or ceramics.

9. The cooler (10) as claimed in one of the preceding claims, wherein each conveyor plank (20) has a plurality of drive elements (24).

10. The cooler (10) as claimed in one of the preceding claims, wherein the drive element (24) is configured so as to be plate-shaped.

11. The cooler (10) as claimed in one of the preceding claims, wherein each drive element (24) extends through a respective clearance (28) in the aeration grate (12).

12. The cooler (10) as claimed in claim 10, wherein the clearance (28) is slot-shaped and has a length that corresponds to that of the length of the stroke of the conveyor unit.

13. A method for preventing grate riddlings in a cooler (10) as claimed in one of the preceding claims, wherein in the event of wear the spacing between the seal assembly (36) and the drive element (24) is decreased.

## Revendications

1. Refroidisseur (10) destiné à refroidir un matériau en vrac, en particulier du clinker de ciment, ledit refroidisseur comportant
un plancher de ventilation fixe (12) qui peut être traversé par un gaz de refroidissement et qui est destiné à recevoir le matériau en vrac,
au moins une unité de transport pourvue de planches de transport (20) qui sont disposées au-dessus du plancher de ventilation et qui peuvent être déplacées suivant un mouvement alternatif dans le sens de transport et dans le sens opposé afin de transporter le matériau en vrac,
et
un ensemble d'étanchéité (36) destiné à empêcher le passage de rouille,
le refroidisseur (10) comportant au moins un élément d'entraînement (24) qui est destiné à entraîner les planches de transport (20) et qui s'étend à travers le plancher de ventilation (12),
**caractérisé en ce que**
l'ensemble d'étanchéité fixe (36) est fixé au plancher de ventilation (12) au moyen d'un élément de liaison amovible (44) et est en appui sur l'élément d'entraînement (24), la distance entre l'ensemble d'étanchéité (36) et l'élément d'entraînement (24) pouvant être réglée par le biais du moyen de liaison (44) .

2. Refroidisseur (10) selon la revendication 1, l'ensemble d'étanchéité fixe (36) comportant un élément de paroi (38) et la distance entre l'élément de paroi (38) et l'élément d'entraînement (24) pouvant être réglée.

3. Refroidisseur (10) selon la revendication 2, l'élément de paroi (38) étant relié au plancher de ventilation (12) par un moyen de liaison amovible, notamment une vis (44).

4. Refroidisseur (10) selon la revendication 3, un trou allongé (46), dans lequel est disposé le moyen de liaison (44), étant ménagé dans le plancher de ventilation (12).

5. Refroidisseur (10) selon l'une des revendications 2 à 4, l'élément de paroi (38) étant en forme de L et formant un angle d'environ 60° à 120°, de préférence 75° à 105°, notamment 90° à 100°.

6. Refroidisseur (10) selon l'une des revendications 2 à 5, l'ensemble d'étanchéité (36) comportant un élément anti-usure (40, 42) monté sur l'élément de paroi (38).

7. Refroidisseur (10) selon la revendication 6, l'élément anti-usure (40, 42) comportant au moins une plaque.

8. Refroidisseur (10) selon la revendication 6 ou 7, l'élément anti-usure (40, 42) comportant un métal dur, comme par exemple du carbure de tungstène et/ou de la céramique.

9. Refroidisseur (10) selon l'une des revendications précédentes, chaque planche de transport (20) comprenant une pluralité d'éléments d'entraînement (24).

10. Refroidisseur (10) selon l'une des revendications précédentes, l'élément d'entraînement (24) étant en forme de plaque.

11. Refroidisseur (10) selon l'une des revendications précédentes, chaque élément d'entraînement (24) s'étendant à travers un évidement respectif (28) ménagé dans le plancher de ventilation (12).

12. Refroidisseur (10) selon la revendication 10, l'évidement (28) étant en forme de fente et ayant une longueur qui correspond à la longueur de course de l'unité de transport.

13. Procédé destiné à empêcher le passage de rouille dans un refroidisseur (10) selon l'une des revendications précédentes, la distance entre l'ensemble d'étanchéité (36) et l'élément d'entraînement (24) étant réduite en cas d'usure.
